# EUROPÄISCHE PATENTSCHRIFT

(11) **EP 3 277 557 B1**
(45) Veröffentlichungstag und Bekanntmachung des Hinweises auf die Patenterteilung: **17.04.2019**
(21) Anmeldenummer: 16703541.9
(22) Anmeldetag: 09.02.2016
(51) Int. Cl.: B62D 5/04

(54) **KUGELGEWINDETRIEB UND DAMIT AUSGESTATTETE LENKUNG EINES KRAFTFAHRZEUGS**
BALL SCREW DRIVE AND MOTOR VEHICLE STEERING SYSTEM EQUIPPED WITH SAME
SYSTÈME VIS-ÉCROU À BILLES ET DIRECTION DE VÉHICULE AUTOMOBILE ÉQUIPÉE DE CE SYSTÈME

(30) Priorität: 31.03.2015 DE 102015104925
(43) Veröffentlichungstag der Anmeldung: 07.02.2018
(73) Patentinhaber: Robert Bosch Automotive Steering GmbH, 73527 Schwäbisch Gmünd (DE)
(72) Erfinder: HETZEL, Oliver, 73550 Waldstetten (DE); JÜSCHKE, Michael, 73565 Spraitbach (DE); BERNHARD, Werner, 73563 Mögglingen (DE)
(74) Vertreter: Bee, Joachim
(86) Internationale Anmeldenummer: PCT/EP2016/052662
(87) Internationale Veröffentlichungsnummer: WO 2016/155921

(56) Entgegenhaltungen:
- DE-A1-102008 049 701
- DE-A1-102010 029 266
- DE-A1-102012 110 081
- GB-A- 2 185 223

## Beschreibung

Die Erfindung betrifft einen Kugelgewindetrieb und eine damit ausgestattete Lenkung eines Kraftfahrzeugs. Insbesondere betrifft die Erfindung einen Kugelgewindetrieb, der eine Gewindespindel enthält zur Umsetzung eines von einem Elektromotor erzeugten Hilfsdrehmomentes in eine translatorische Hilfskraft, welche auf eine Zahnstange in der Lenkung des Kraftfahrzeugs wirkt.

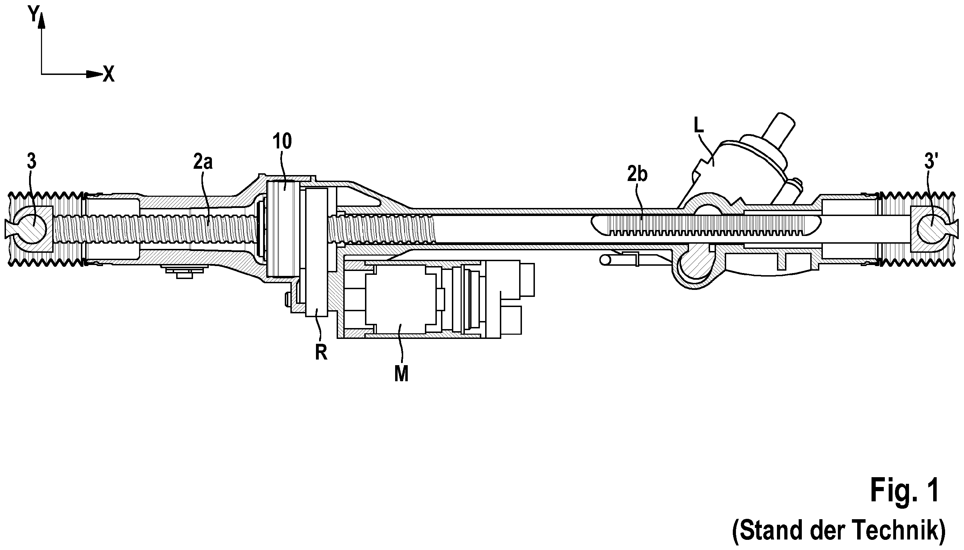

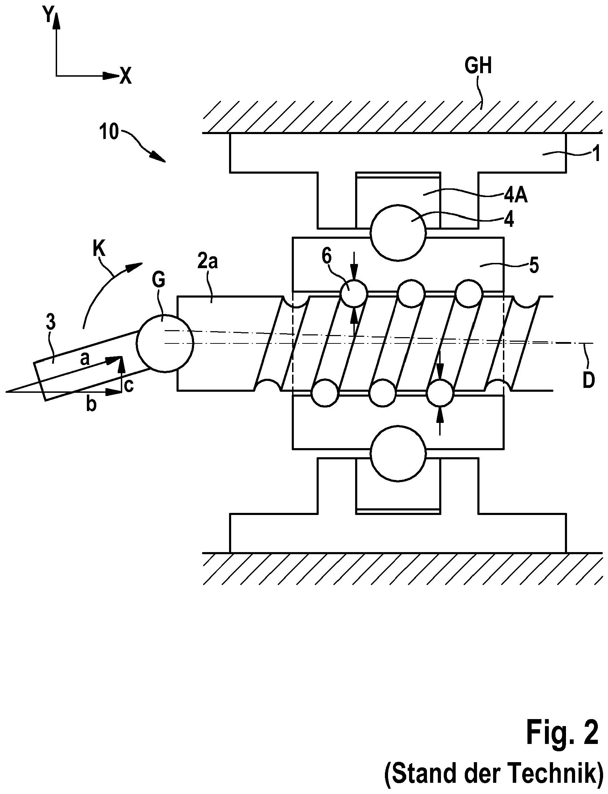

Auf dem Gebiet der Kraftfahrzeug-Lenkungen ist es hinlänglich bekannt, Kugelgewindetriebe einzusetzen, um eine von einem Hilfskraftmotor (Elektromotor) erzeugte rotatorische Hilfskraft (Drehmoment) in eine translatorische Hilfskraft umzusetzen, die auf eine Gewindespindel bzw. Zahnstange der Lenkung wirkt. In der Fig. 1 ist eine solche Konstruktion schematisch dargestellt. Wie dort zu sehen ist, wird über den Kugelgewindetrieb 10 die Gewindespindel 2a bzw. die Zahnstange 2b der Lenkung ausgelenkt, wobei das Ende der Gewindespindel 2a mittels eines Axialgelenks G mit einer Spurstange 3 verbunden ist; am Ende der Zahnstange 2b ist diese entsprechend gelenkig mit einer Spurstange 3' verbunden. Die Zahnstange 2b steht mit dem Ritzel eines Lenkgetriebes L im Eingriff. Der Kugelgewindetrieb 10 wird über einen Riemen R oder dergleichen von einem Elektromotor M angetrieben. In der Fig. 2 ist der Aufbau des Kugelgewindetriebes im Detail dargestellt: Der Kugelgewindetrieb 10 weist eine mittels eines Festlagers 4 in einem Gehäuse 1 gelagerte Kugelmutter 5 auf, die zusammen mit der Gewindespindel 2a und den umlaufenden Kugeln 6, den wesentlichen Teil des Kugelgewindetriebes bildet und die sich um die Drehachse D drehen kann Das Festlager 4 nimmt im Wesentlichen nur Axialkräfte auf und ist somit in Radialrichtung unbelastet.

Beispielsweise ist ein solcher Kugelgewindetrieb aus der DE 10 2012 110 081 A1 bekannt. Diese Art von Kugelgewindetrieb wird häufig in elektrischen Hilfskraft-Lenkungen, sog. EPS-Lenkungen (Electric Power Steering), eingesetzt.

Des Weiteren ist bekannt, z.B. aus der DE 10 2010 029 266 A1, einen Kugelgewindetrieb der eingangs genannten Art dahingehend weiterzubilden, dass an jeder Stirnseite des Festlagers, insbesondere am Außenring des Festlagers (s. dort Fig. 2), mindestens ein Federelement "24" angeordnet wird. Hierdurch wird an dem Festlager eine Elastizität der Lagerung erreicht, wodurch in axialer Richtung wirkende stoßartige Belastungen effektiv gedämpft werden können.

Die DE-A-10 2008 049701 offenbart einen Kugelgewindetrieb mit den Merkmalen des Oberbegriffs des Anspruchs 1.

In der Fig. 2 ist ein herkömmlicher Kugelgewindetrieb 10 dargestellt, bei dem sich im alltäglichen Einsatz das Problem stellt, dass insbesondere die Querkraftkomponente c der Spurstangenkraft a (erzeugt durch die gegebenen Winkel der jeweiligen Spurstangen 3 im Fahrzeug) eine große Herausforderung an die Baugruppe eines Kugelgewindetriebs (KGT) in einer EPS-Lenkung darstellt. Ist die Lenkung nicht in der Lage, die unter Umständen sehr hohen Querkräfte aufzunehmen, kann es zu einer Schädigung des Kugelgewindetriebs (nachfolgend auch Kugelumlaufgewinde genannt) und KGT-Lagers kommen, was u.a. zu einer signifikante Verschlechterung der akustischen Eigenschaften führt. Wie in der Fig. 2 anhand der grafischen Zerlegung der Spurstangen-Kraft a in die Komponenten b und c zu sehen ist, führt die Querkraftkomponente c der Spurstangenkraft a zu einer Radiallast, d.h. zu einer in Radialrichtung Y wirkenden Querbelastung des Kugelgewindetriebes 10. Diese Querbelastung bewirkt nicht nur, dass die Gewindespindel 2a und Zahnstange 2b sich elastisch verbiegen können, sondern dass sich ein entsprechendes Kippmoment K im Kugelgewindetrieb 10 ausbildet. Das Kippmoment K wiederum bewirkt eine besonders hohe Belastung der ersten Kugel 6 im Gewindetrieb und der letzen Kugel. Die wird in Fig. 2 durch die Pfeile angedeutet. Hohe Kippmomente stützen sich dort im vorderen bzw. hinteren Bereich des Kugelumlaufs ab und erzeugen eine hohe Hertzsche Pressung im Kontakt "Kugel-Laufbahn" bzw. "Kugel-Kugel", insbesondere in den äußeren Gewindegängen der Kugelmutter 5. Dies führt wiederum zu einer hohen Schädigung und Lebensdauer-Reduzierung, zur Deformationen in der Kugellaufbahn und/oder an der Kugel, wonach dann eine signifikante akustische Verschlechterung im Kugelgewindetrieb die Folge ist.

Die Erfindung geht also von einem herkömmlichen Kugelgewindetrieb aus, der eine Gewindespindel enthält zur Umsetzung eines von einem Elektromotor erzeugten Hilfsdrehmomentes in eine translatorische Hilfskraft, welche auf eine Zahnstange in einer Lenkung eines Kraftfahrzeugs wirkt, wobei ein Ende der Gewindespindel und ein Ende der Zahnstange jeweils mittels eines Axialgelenks mit einer Spurstange verbunden sind, wobei der Kugelgewindetrieb eine mittels eines Festlagers (das nur Axialkräfte aufnehmen kann) in einem Gehäuse gelagerte Kugelmutter aufweist.

Aufgabe der vorliegenden Erfindung ist es, einen Kugelgewindetrieb der eingangs genannten Art deutlich zu verbessern, so dass die oben genannten Nachteile in vorteilhafter Weise überwunden werden. Insbesondere soll der Kugelgewindetrieb für den Einbau in Lenkungen so beschaffen sein, dass auch hohe Querbelastungen zu keiner hohen Belastung im Kugelumlauf des Kugelgewindetriebes führen.

Die Aufgabe wird gelöst durch einen Kugelgewindetrieb mit den Merkmalen des Anspruchs 1. Außerdem wird eine Lenkung vorgeschlagen, die mit einem solchen Kugelgewindetrieb ausgestattet ist.

Der erfindungsgemäße Kugelgewindetrieb zeichnet sich dadurch aus, dass zwischen dem mit der Spurstange verbundenen Ende der Gewindespindel und dem Kugelgewindetrieb ein Gleitlager-Element angeordnet ist, welches die Gewindespindel radial gegenüber dem Gehäuse abstützt.

Vorzugsweise ist das Gleitlager-Element als eine Gleitlagerbuchse ausgebildet, welche die Gewindespindel umschließt, wobei die Gleitlagerbuchse in dem Gehäuse kardanisch gelagert ist und die aus den Spurstangen resultierende Querkraftkomponente der Zahnstange aufnimmt.

Durch die hier offenbarte Erfindung wird zwischen dem Kugelgewindetrieb (kurz: KGT) und der Ankopplung der Spurstange eine die Gewindespindel radial stützende Gleitlagerung vorgesehen, die auftretende Querkräfte abfangen kann, wodurch effektiv verhindert wird, dass Querbelastungen (KGT u. KGT-Lager sehen nur noch Axialkräfte) direkt auf den Kugelumlauf bzw. dessen Lager einwirken können. Vorzugsweise wird die Erfindung durch eine Gleitlagerbuchse realisiert, die in dem Gehäuse kardanisch schwenkbar montiert ist.

Durch eine sehr dicht an der krafteinleitenden Stelle platzierte Gleitlagerstelle ergeben sich geringere Durchbiegungen der Zahnstange und reduzierte Belastungen auf die Gewindespindel den KGT und des KGT-Lagers. Hierdurch ist es möglich, kleinere Gewindespindel oder Zahnstangen-Durchmesser zu verwenden und auch weniger Gewindegänge im Kugelumlauf vorzusehen, ohne die zulässigen Festigkeiten zu überschreiten. Dadurch kann die Konstruktion der Lenkung sehr kostengünstig realisiert werden. Zudem wird die gesamte Kugelkette weniger belastet, wodurch die Robustheit hinsichtlich der Betriebseigenschaften deutlich steigt.

Die Erfindung betrifft auf eine Lenkung für ein Kraftfahrzeug, die mit einem solchen Kugelgewindetrieb ausgestattet ist, und betrifft auch ein Gleitlager-Element an sich, das für den Aufbau eines solchen Kugelgewindetriebes geeignet ist. Hierzu wird auch auf die nebengeordneten Ansprüche verwiesen.

Die oben genannte Vorteile sowie weitere Vorteile ergeben sich auch aus Unteransprüchen, welche vorteilhafte Ausgestaltungen der Erfindung angeben.

Demnach weist die Gleitlagerbuchse erfindungsgemäß einen ringförmigen Außenumfang auf, der konvex gewölbt ist, insbesondere in Form einer Kugelkalotte, gewölbt ist. In diesem Zusammenhang ist es vorteilhaft, wenn zumindest ein erster Teilbereich des Außenumfangs der Gleitlagerbuchse an einer Innenwandung des Gehäuses anliegt, welche konkav gewölbt ist. Hierdurch wird in sehr effizienter Weise eine halbkardanische Lagerung der Gleitlagerbuchse realisiert.

Weiter erfindungsgemäß liegt zumindest ein zweiter Teilbereich des Außenumfangs der Gleitlagerbuchse an der Innenwandung eines in das Gehäuse einführbaren Ringes an, welche konkav gewölbt ist. Der einführbare Ring kann mit einem Fixierelement in einer gewünschten Position fixiert werden. Hierdurch wird der Einbau der Gleitlagerbuchse in das Gehäuse vereinfacht; zudem ist die kardanische Lagerung der Buchse auf ein evtl. gewünschtes Spiel hin einstellbar.

Es kann gemäß einer nicht beanspruchten Variante die Gleitlagerbuchse an ihren beiden Enden von jeweils einem Runddrahtring gegen ein Verschieben in axialer Richtung gesichert sein. Vorzugsweise weist die Gleitlagerbuchse hierfür an ihrem Außenumfang zwei Nuten auf, in welche die Runddrahtringe aufgenommen sind. Des Weiteren kann vorgesehen werden, dass die Innenwandung der Gleitlagerbuchse an beiden Enden der Buchse ein Fase aufweist bzw. dort angefast ist.

Das Gleitlager-Element bzw. die Gleitlagerbuchse ist vorzugsweis aus Metall, insbesondere Stahl oder Aluminium, oder aus Kunststoff, insbesondere einem Polyamid, gefertigt.

Nachfolgend wird die Erfindung anhand von Ausführungsbeispielen, die sich auf eine Lenkung für ein Kraftfahrzeug beziehen, im Detail und unter Bezugnahme auf die beiliegenden Zeichnungen Fig. 3, 4a/b und 5a/b beschrieben, die folgende schematische Darstellungen wiedergeben:
- Fig. 3: zeigt im Querschnitt den Aufbau einer Lenkung, die mit einem erfindungsgemäßen Kugelgewindetrieb ausgestattet ist;
- Fig. 4a/b: zeigen im Detail den Einbau eines Gleitlager-Elementes gemäß einem ersten Ausführungsbeispiel in Form einer kardanisch gelagerten Gleitlagerbuchse; und
- Fig. 5a/b: zeigen im Detail den Einbau eines Gleitlager-Elementes gemäß einem zweiten Ausführungsbeispiel in Form einer mittels Runddrahtringen gesicherten Gleitlagerbuchse.

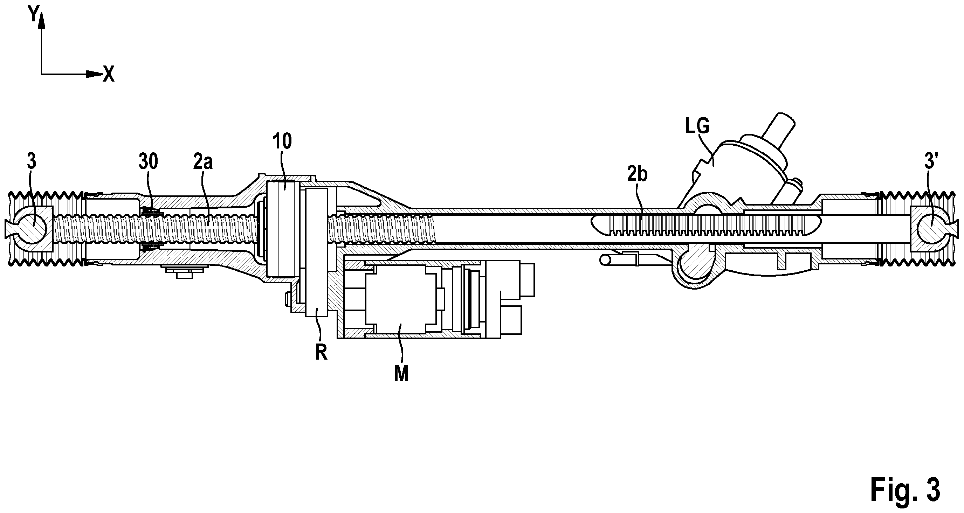

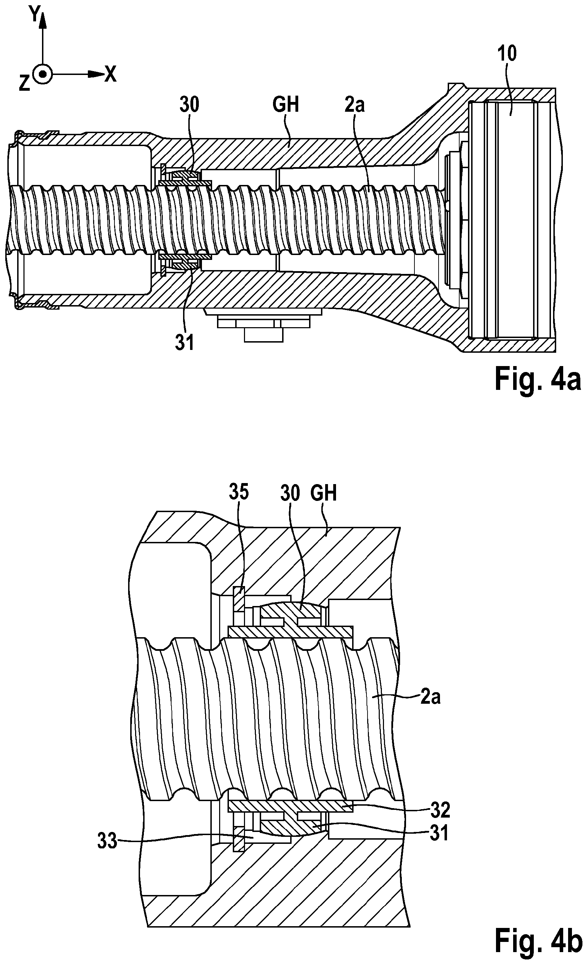

Die in den Fig. 3 und 4 dargestellten Kugelgewindetriebe weisen auch solche Komponenten auf, die bereits in den Fig. 1 und 2 vorhanden sind und mit Bezugszeichen versehen sind. Daher werden die Bezugszeichen für die folgenden Komponenten beibehalten: Lenkungs-Gehäuse GH mit Lenkgetriebe LG und Kugelgewindetrieb 10 im Gehäuse(teil) 1; Kugelmutter 5; Innenbereich bzw. Kugelumlauf mit Kugeln 6; Gewindespindel 2b mit ihrer Drehachse D; Festlager 4; Zahnstange 2b; Gelenk G zur Ankopplung der jeweiligen Spurstange 3 bzw. 3'; Riemen R und Motor M.

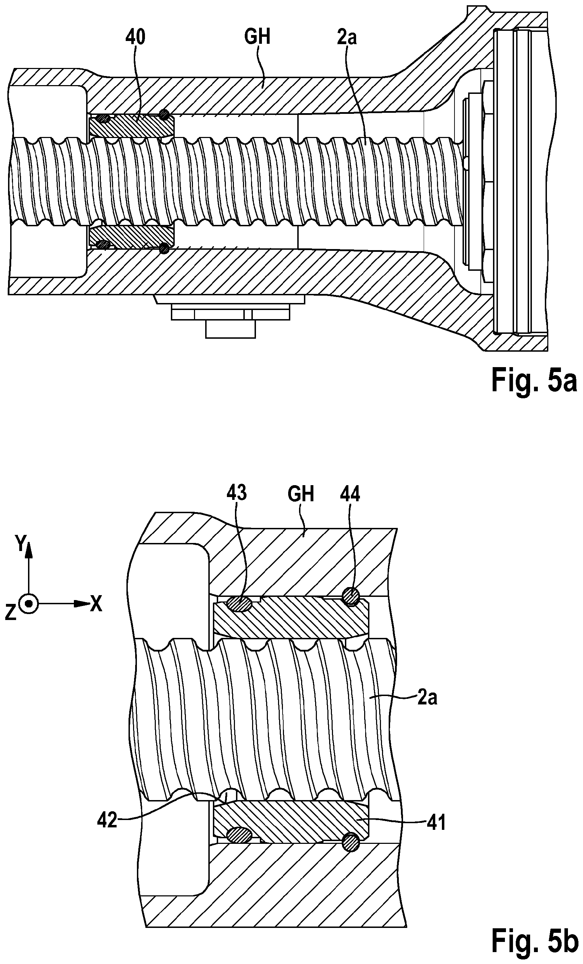

Nachfolgend wird zur Beschreibung des ersten Ausführungsbeispiels auf die Fig. 3 - 5a/b Bezug genommen:
Die Fig. 3 zeigt im Querschnitt den Aufbau einer Lenkung, die mit einem erfindungsgemäßen Kugelgewindetrieb 10 ausgestattet ist. Der Kugelgewindetrieb 10 umfasst die Gewindespindel 2a, welche baueinheitlich mit der Zahnstange 2b der Lenkung ausgebildet ist. Das Gesamtgebilde wird auch kurz vereinfachend mit Zahnstange bezeichnet. An beiden freien Enden des Gesamtgebildes ist eine Spurstange 3 bzw. 3' gelenkig angeschlossen. Um nun zu verhindern, dass hohe Querbelastungen, also hohe Querkräfte in Radialrichtung Y, den Kugelumlauf des Kugelgewindetrieb 10 überlasten, ist zwischen dem Kugelgewindetrieb 10 und dem freien Ende der Gewindespindel 2a, also dem mit der Spurstange 3 verbundenen Ende, ein Gleitlager-Element 30 angeordnet, das die Gewindespindel 2a radial gegenüber dem Gehäuse GH abstützt.

Wie die Figuren 4a/b näher im Detail zeigen, ist das Gleitlager-Element als Gleitlagerbuchse 30 ausgebildet, welche die Gewindespindel 2a umschließt. Die Buchse 30 besteht im Wesentlichen aus einem ringförmigen Körper mit glatter Innenwandung 32 und einem konvex gewölbtem Außenumfang 31. In dem hier gezeigten Beispiel weist dieser Teil der Buchse die Form einer Kugelkalotte auf, welche etwa zur Hälfte (rechte Hälfte in Fig. 4b) in einem konkav geformten Abschnitt des Gehäuses GH aufgenommen wird. Die andere Hälfte der Kugelkalotte 31 (linke Hälfte in Fig. 4b) wird von einem in das Gehäuse einführbaren Ring 33 bzw. von dessen konkav geformten Innenwandung gehalten, so dass die Kugelkalotte und somit die ganze Gleitlagerbuchse 30 an der gewünschten Stelle schwenkbar um die z-Achse positionier ist. Zur Fixierung der Anordnung dient ein Fixierelement in Form eines Ringes 35.

Das in den Fig. 4a/b dargestellte erfindungsgemäße Ausführungsbeispiel zeigt somit eine kardanisch gelagerte und um die z-Achse schwenkbare Buchse 30, welche die Gewindespindel 2a radial stützt und Querkräfte (in y-Richtung) abfangen kann. Dadurch wird der Kugelumlauf, insbesondere die ersten und letzten Kugelbahnen, gegen Überlastung geschützt. Die Kontaktierung bzw. das Spiel zwischen der Gleitlagerbuchse 30 und dem Gehäuse GH kann über das Fixierungselement 35 optimal eingestellt werden. Die Buchse selbst bzw. der ringförmige Körper 30 kann für Zwecke der Material- und Gewichtseinsparung Einschneidungen (wie in Fig. 4b) gezeigt aufweisen. Wenn gewünscht können die Einschneidungen bzw. Verjüngungen des Materials auch zum Zwecke einer gewissen Elastizität relativ schwach dimensioniert werden.

Anhand der Fig. 5a/b wird nachfolgend die nicht beanspruchte Variante der Erfindung beschrieben: Als Gleitlager-Element 40 wird ein ebenfalls ringförmiger Körper eingesetzt, der die Form einer Gleitlagerbuchse aufweist und die Gewindespindel 2a umfasst. Die Innenwandung des Gleitlager-Elements bzw. der Gleitlagerbuchse 40 ist im Innenbereich ebenfalls plan und glatt ausgebildet. Die beiden Enden der Buchse 40 können angefast sein, d.h. Fasen 42 aufweisen. Die Fasen erleichtern die Montage und sind vorteilhaft hinsichtlich der Biegelinie und der Rotation des Gewindes.

Am Außenumfang der Buchse 40 sind Nuten vorgesehen, die sich jeweils in Umlaufrichtung erstrecken und je einen Runddrahtring 43 bzw. 44 aufnehmen. Die Runddrahtring 43 bzw. 44 kontaktieren die Innenwandung des Gehäuses GH, so dass die Gleitlagerbuchse leicht schwenkbar (kardanisch) montiert ist. Des Weiteren ist in der Mitte der Buchse 40 (s. Fig. 5b) der Außenumfang 41 leicht konvex gewölbt und beispielsweise in Form einer Kugelkalotte ausgebildet. Die Kugelkalotte ist mit einem der Runddrahtringe, hier mit dem rechten Ring 44, axial fixiert. Nach einem Auslenken der Anordnung (bei auftretender Querbelastung) stellt sich über den O-Ring automatisch eine Mittenstellung ein. Hierdurch wird bei der in Fig. 5a/b dargestellten Lösung eine automatische Mittenzentrierung erreicht. Diese Funktion ist bei dem Beispiel aus Fig. 4a/b nicht implementiert.

In den meisten Anwendungsfällen, sollte der Einbauort der Gleitlagerbuchse 30 bzw. 40 sich vorzugsweise in Nähe zu dem freien Ende der Gewindespindel 2a befinden, also möglichst nahe Anschlussgelenk für die Spurstange 3 (s. auch Fig. 3). Dadurch können an der Spurstange wirkende Querkraftkomponenten besser abgestützt / abgefangen werden. Die Buchse 30 bzw. 40 selbst besteht im vorliegenden Beispiel aus einem Polyamid vom Typ PA-6, kann aber auch aus anderen geeigneten Kunststoffen gefertigt sein, alternativ auch aus Metall, wie z.B. Stahl oder Aluminium.

Die Erfindung ist besonders geeignet, in der Lenkung eines Kraftfahrzeuges verbaut zu werden, insbesondere in einer Lenkung mit elektrischer Hilfskraftunterstützung. Durch die Erfindung sind leichtere Design- bzw. Konstruktionsvarianten realisierbar, da kleinere Gewindespindel oder Zahnstangen-Durchmesser möglich sind. Auch ist eine kürzere Bauweise der Kugelmutter möglich, da weniger Gewindegänge erforderlich sind. Die Performance bzw. Betriebseigenschaften werden durch eine nicht verspannte Kugelkette deutlich verbessert.

Zusammenfassend betrifft die Erfindung einen Kugelgewindetrieb 10, der in einer Lenkung eingesetzt wird. Der Kugelgewindetrieb 10 enthält eine Gewindespindel 2a zur Umsetzung eines von einem Elektromotor M erzeugten Hilfsdrehmomentes in eine translatorische Hilfskraft, die auf eine Zahnstange 2b in der Lenkung eines Kraftfahrzeugs wirkt, wobei ein Ende der Gewindespindel 2a und ein Ende der Zahnstange 2b jeweils mittels eines Axialgelenks G mit einer Spurstange 3, 3' verbunden sind, wobei der Kugelgewindetrieb 10 eine mittels eines Festlagers 4 in einem Gehäuse GH gelagerte Kugelmutter 5 aufweist. Um hohe Querbelastungen bzw. Querkräfte, die von der/den Spurstangen 3, 3' kommen und in Radialrichtung y wirken, aushalten zu können, ist zwischen dem mit der einen Spurstange 3 verbundenen Ende der Gewindespindel 2a und dem Kugelgewindetrieb 10 ein Gleitlager-Element 30 angeordnet ist, welches die Gewindespindel 2a radial gegenüber dem Gehäuse GH abstützt. Das Gleitlager-Element ist vorzugsweise als eine Gleitlagerbuchse 30 ausgebildet, die in dem Gehäuse GH kardanisch zumindest um eine Querachse z schwenkbar gelagert ist, welche senkrecht zu einer Richtung y orientiert ist, in die eine Querkraftkomponente c einer Spurstangen-Kraft a auftritt. Bevorzugt hat die Gleitlagerbuchse 30 einen ringförmigen Außenumfang 31, der konvex gewölbt ist, insbesondere in Form einer Kugelkalotte, gewölbt ist. Zumindest ein erster Teilbereich des konvexen Außenumfangs 31 liegt an einem konkaven Teilbereich der Innenwandung des Gehäuses GH an. Das KGT-Lager nimmt unter Einsatz der hier vorgestellten Lagerung ausschließlich Axialkräfte auf und kann daher als reines Axialkugellager ausgeführt werden.

Der Einsatz von Rundstahlringen bzw. O-Ringen (wie in Fig. 5a/b gezeigt) führt eine automatische Mittenzentrierung der Gleitbuchse herbei: Wird die Zahnstange radial belastet ergibt sich bezogen auf die Lagerung der Biegelinienverlauf der Zahnstange. Die kardanische Gleitlagerung stützt hierbei die Radialkraft ab. Da die Buchse entgegen dem theoretischen Berechnungsansatz nicht die "ideale Baulänge von 0 mm" hat, folgt sie entsprechend ihrer Länge dem Verlauf der Biegelinie der Zahnstange. Entfällt die Querkraft nimmt die Zahnstange innerhalb ihrer Lagerung wieder die Neutralstellung ein und nimmt das kardanische Gleitlager mit - aber nicht vollständig. Auf Grund von Lagerluft zwischen Zahnstange und Gleitlager verbleibt ein kleiner Restwinkel der sich bezüglich Tragbild und insbesondere Reibung negativ bemerkbar macht. Wird nun ein O-Ring zwischen Gehäuse und Gleitlager montiert, verformt sich dieser beim Schwenken des Gleitlagers unter Querkraft ebenfalls elastisch. Entfällt nun die Querkraft will der O-Ring seine ursprüngliche Form wieder einnehmen und stellt das Gleitlager in Mittelstellung zurück (der O-Ring erzeugt ein Rückstellmoment).

### Bezugszeichenliste

- 10 :: Kugelgewindetrieb
- 1 :: Gehäuse der des Kugelgewindetriebs
- 2a :: Gewindespindel bzw. 2b : Zahnstange
- 3, 3' :: Spurstange
- 4 :: Festlager mit 4A : Außenring
- 5 :: Kugelmutter
- 6 :: Kugeln bzw. Kugelumlauf

- GH :: Gehäuse der Lenkung
- L :: Lenkgetriebe
- D :: Drehachse
- G :: Axialgelenk zur gelenkigen Verbindung der Spurstange mit der Gewindespindel bzw. Zahnstange
- a :: Spurstangen-Kraft (in die Komponenten b und c zerlegbar)
- b :: Axialkraftkomponente
- c :: Querkraftkomponente

- K :: Kippmoment
- x, y, z :: Raumachsen bzw. Richtungskoordinaten

- R :: Riemen
- M :: Elektromotor

- 30 :: Gleitlager (erstes Beispiel) in Form einer kardanisch gelagerten Gleitlagerbuchse ohne Mittenzentrierung
- 31 :: ringförmiger Außenumfang, konvex gewölbt, z.B. in Form einer Kugelkalotte
- 32 :: Innenwand der Gleitlagerbuchse
- 33 :: keilfömiger / konkav geformter Ring
- 35 :: Fixierelement / Fixierring

- 40 :: Gleitlager (zweites Beispiel) in Form einer kardanisch gelagerten Gleitlagerbuchse mit Mittenzentrierung
- 41 :: Außenumfang, leicht konvex gewölbt und mit Nuten versehen
- 42 :: abgefaste Enden
- 43, 44 :: Runddrahtringe in den Nuten

## Patentansprüche

1. Kugelgewindetrieb (10) mit einer Gewindespindel (2a) zur Umsetzung eines von einem Elektromotor (M) erzeugten Hilfsdrehmomentes in eine translatorische Hilfskraft, die auf eine Zahnstange (2b) in einer Lenkung eines Kraftfahrzeugs wirkt, wobei ein Ende der Gewindespindel (2a) und ein Ende der Zahnstange (2b) jeweils mittels eines Axialgelenks (G) mit einer Spurstange (3) verbunden sind, wobei der Kugelgewindetrieb (10) eine mittels eines Lagers (4) in einem Gehäuse (GH) gelagerte Kugelmutter (5) aufweist, wobei zwischen dem mit der Spurstange (3) verbundenen Ende der Gewindespindel (2a) und dem Kugelgewindetrieb (10) ein Gleitlager-Element (30) angeordnet ist, das die Gewindespindel (2a) radial gegenüber dem Gehäuse (GH) abstützt, wobei das Gleitlager-Element als eine Gleitlagerbuchse (30) ausgebildet ist, die die Gewindespindel (2a) umschließt, wobei die Gleitlagerbuchse (30) in dem Gehäuse (GH) kardanisch zumindest um eine Querachse (z) schwenkbar gelagert ist, welche senkrecht zu einer Richtung (y) orientiert ist, in die eine Querkraftkomponente (c) einer Spurstangen-Kraft (a) auftritt, und wobei die Gleitlagerbuchse (30) einen ringförmigen Außenumfang (31; 41) aufweist, der konvex in Form einer Kugelkalotte (31), gewölbt ist,
**dadurch gekennzeichnet, dass** ein erster Teilbereich des Außenumfangs (31) der Gleitlagerbuchse (30) an einer Innenwandung des Gehäuses (GH) anliegt, die konkav gewölbt ist und dass ein zweiter Teilbereich des Außenumfangs (31) der Gleitlagerbuchse (30) an der Innenwandung eines in das Gehäuses (GH) einführbaren Ringes (33) anliegt, die konkav gewölbt ist.

2. Kugelgewindetrieb (10) nach Anspruch 1, **dadurch gekennzeichnet, dass** der in das Gehäuses (GH) einführbare Ring (33) mit einem Fixierelement (35) in einer gewünschten Position fixiert ist.

3. Lenkung für ein Kraftfahrzeug, insbesondere Lenkung mit elektrischer Hilfskraftunterstützung, **dadurch gekennzeichnet, dass** sie den Kugelgewindetrieb (10) nach einem der vorhergehenden Ansprüche aufweist.

## Claims

1. Ball screw drive (10) having a threaded spindle (2a) for converting an assistance torque generated by an electric motor (M) into a translational assistance force which acts on a toothed rack (2b) in a steering system of a motor vehicle, wherein one end of the threaded spindle (2a) and one end of the toothed rack (2b) are connected in each case by means of an axial joint (G) to a track rod (3), wherein the ball screw drive (10) has a ball nut (5) which is mounted in a housing (GH) by means of a bearing (4), wherein a plain bearing element (30) is arranged between that end of the threaded spindle (2a) which is connected to the track rod (3) and the ball screw drive (10), which plain bearing element supports the threaded spindle (2a) radially with respect to the housing (GH), wherein the plain bearing element is formed as a plain bearing bushing (30) which surrounds the threaded spindle (2a), wherein the plain bearing bushing (30) is cardanically mounted in the housing (GH) so as to be pivotable at least about a transverse axis (z) which is oriented perpendicular to a direction (y) in which a transverse force component (c) of a track rod force (a) occurs, and wherein the plain bearing bushing (30) has a ring-shaped outer circumference (31; 41) which is convexly domed in the form of a spherical cap (31), **characterized in that** a first subregion of the outer circumference (31) of the plain bearing bushing (30) bears against a concavely domed inner wall of the housing (GH), and **in that** a second subregion of the outer circumference (31) of the plain bearing bushing (30) bears against the concavely domed inner wall of a ring (33) which is insertable into the housing (GH).

2. Ball screw drive (10) according to Claim 1, **characterized in that** the ring (33) which is insertable into the housing (GH) is fixed in a desired position by means of a fixing element (35) .

3. Steering system for a motor vehicle, in particular steering system with electrical power steering assistance, **characterized in that** said steering system has the ball screw drive (10) according to one of the preceding claims.

## Revendications

1. Système de vis et écrou à billes (10) comprenant une broche filetée (2a) pour convertir un couple auxiliaire généré par un moteur électrique (M) en une force de translation auxiliaire qui agit sur une crémaillère (2b) dans une direction d'un véhicule automobile, une extrémité de la broche filetée (2a) et une extrémité de la crémaillère (2b) étant à chaque fois connectées au moyen d'une articulation axiale (G) à une barre de liaison (3), le système de vis et écrou à billes (10) présentant un écrou à billes (5) supporté dans un boîtier (GH) au moyen d'un palier (4), un élément de palier lisse (30) étant disposé entre l'extrémité de la broche filetée (2a) connectée à la barre de liaison (3) et le système de vis et écrou à billes (10), lequel supporte la broche filetée (2a) radialement par rapport au boîtier (GH), l'élément de palier lisse étant réalisé sous forme de douille de palier lisse (30) qui entoure la broche filetée (2a), la douille de palier lisse (30) étant supportée dans le boîtier (GH) à la cardan de manière à pouvoir pivoter au moins autour d'un axe transversal (z) qui est orienté perpendiculairement à une direction (y), dans laquelle s'exerce une composante de force transversale (c) d'une force de barre de liaison (a), et la douille de palier lisse (30) présentant une périphérie extérieure annulaire (31 ; 41) qui présente une courbure convexe sous forme d'une calotte sphérique (31),
**caractérisé en ce qu'**une première région partielle de la périphérie extérieure (31) de la douille de palier lisse (30) s'applique contre une paroi interne du boîtier (GH) qui présente une courbure concave et **en ce qu'**une deuxième région partielle de la périphérie extérieure (31) de la douille de palier lisse (30) s'applique contre la paroi interne d'une bague (33) pouvant être introduite dans le boîtier (GH), laquelle paroi interne présente une courbure concave.

2. Système de vis et écrou à billes (10) selon la revendication 1, **caractérisé en ce que** la bague (33) pouvant être introduite dans le boîtier (GH) est fixée avec un élément de fixation (35) dans une position souhaitée.

3. Direction pour un véhicule automobile, en particulier direction avec assistance électrique, **caractérisée en ce qu'**elle présente le système de vis et écrou à billes (10) selon l'une quelconque des revendications précédentes.
